Europäisches Patentamt

European Patent Office

Office européen des brevets

(19)

(11) Numéro de publication: **0 262 048
B1**

(12)                    **FASCICULE DE BREVET EUROPEEN**

(45) Date de publication du fascicule du brevet: **09.01.91**

(51) Int. Cl.⁵: **B 23 K 11/30, B 24 B 33/00**

(21) Numéro de dépôt: **87402131.4**

(22) Date de dépôt: **24.09.87**

(54) **Appareil de rodage automatique d'électrodes de robot de soudage.**

(30) Priorité: **25.09.86 FR 8613709**

(43) Date de publication de la demande:
**30.03.88 Bulletin 88/13**

(45) Mention de la délivrance du brevet:
**09.01.91 Bulletin 91/02**

(84) Etats contractants désignés:
**DE ES GB IT**

(56) Documents cités:
**DE-A-2 855 041
DE-A-2 943 650
FR-A-2 450 142
GB-A- 575 596
US-A-2 835 086
US-A-2 997 080**

(73) Titulaire: **AUTOMOBILES PEUGEOT
75, avenue de la Grande Armée
F-75116 Paris (FR)**

(73) Titulaire: **AUTOMOBILES CITROEN
62 Boulevard Victor-Hugo
F-92200 Neuilly-sur-Seine (FR)**

(72) Inventeur: **Restout, Albert Gilbert Louis
1 bis, avenue Pierre Assailly
F-93150 Blanc Mesnil (FR)**

(74) Mandataire: **Boivin, Claude
9, rue Edouard-Charton
F-78000 Versailles (FR)**

Courier Press, Leamington Spa, England.

**Description**

La présente invention concerne un appareil de rodage d'électrodes de robot de soudage.

On sait que les électrodes de soudure doivent subir séquentiellement une opération de rodage et que les robots de soudage comportent généralement deux électrodes aux extrémités tronconiques qui doivent être rodées sur leurs parties coniques et leurs parties planes.

On connaît des appareils, commandés par le cerveau électronique du robot et permettant de roder simultanément les deux électrodes selon une première opération pour roder les parties coniques et une deuxième opération pour roder les extrémités planes. Ces appareils comportent des moyens pour entraîner dans un mouvement de rotation alternative simultané, une broche portant un outil de fraisage pour les parties coniques et une broche portant un outil de rodage pour les parties planes, ainsi que des moyens pour centrer les broches par rapport à l'appareil. En raison de la tolérance de position acceptable pour la tête du robot, cette tête est soumise à une contrainte quand les électrodes sont engagées dans les outils de rodage.

D'autre part les électrodes de soudage font entre elles un angle qui peut être important. Quand elles se présentent simultanément pour le rodage elles ne sont pas perpendiculaires à l'axe de la fraise. Au bout d'un certain nombre de rodages le point de contact des électrodes et de la fraise se déplace dans l'espace, de sorte que la tête du robot est de plus en plus contrainte.

Le document FR—A1—2 450 142 décrit un appareil de rodage automatique d'électrodes de robot de soudage dans lequel l'outil de rodage et un moteur d'entraînement de cet outil sont portés sur un support monté pivotant autour d'un axe parallèle à l'axe de l'outil de rodage; un vérin permet de faire pivoter le support pour amener l'outil et son moteur soit dans la position d'utilisation, soit dans une position de repos. Mais l'outil exerce une contrainte de position sur les électrodes et le moteur est suspendu.

L'appareil de rodage selon l'invention qui remédie à cet inconvénient, est caractérisé en ce que l'outil est monté à l'une des extrémités d'une bielle en appui sur le châssis de l'appareil, celui-ci étant muni de moyens pour que la seconde extrémité de la bielle soit entraînée par un vérin articulé selon un mouvement en arc de cercle approximativement centré sur l'outil. Dans ces conditions, il suffit de faire pivoter la bielle en actionnant le vérin pour assurer le rodage.

Selon une caractéristique complémentaire de l'invention, l'outil de rodage comprend une fraise à double denture conique munie d'un perçage axial dans lequel est fixé un pion muni d'une denture plane à chacune de ses extrémités. Le même outil peut ainsi effectuer simultanément les rodages des parties coniques et des parties planes des deux électrodes du robot.

On a décrit ci-après, à titre d'exemples deux modes de réalisation de l'appareil selon l'invention avec référence aux dessins annexés dans lesquels:

La Figure 1 est une vue en coupe verticale suivant I—I de la Figure 2, d'un premier mode de réalisation;

La Figure 2 en est une vue en bout;

La Figure 3 est une vue en élévation de la bielle;

La Figure 4 est une vue en bout de la fraise à double denture conique;

La Figure 5 en est un coupe diamétrale suivant V—V de la Figure 4;

La Figure 6 est une vue en bout du pion à dentures planes;

La Figure 7 en est une vue en élévation.

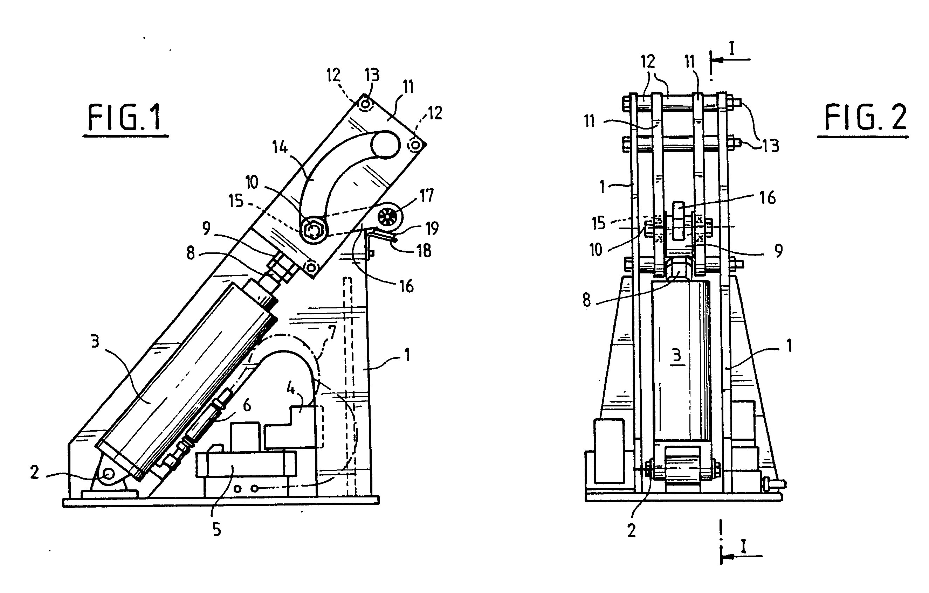

On voit à la Figure 1 un châssis mécano-soudé 1 sur lequel est articulé en 2 un vérin 3 auquel sont associés un détendeur 4, un distributeur 5, un limiteur de débit 6, et des conduits d'alimentation 7. Sur la tige 8 du vérin est fixée une chape 9 entraînant un axe 10. Deux plaques rectangulaires 11 sont fixées au châssis 1 par des entretoises tubulaires 12 et des boulons 13. Elles sont disposées de part et d'autre de la chape 9 et comportent une ouverture 14 en forme d'arc de cercle servant de came. L'axe 10 est muni de galets 15 roulant à l'intérieur des ouvertures 14.

Une bielle 16 porte sur l'une de ses extrémités un outil de rodage 17, destiné à coopérer avec des électrodes disposées parallèlement à l'axe 10; cette extrémité est en appui sur un support 18 solidaire du châssis 1, par l'intermédiaire d'une butée en élastomère 19. L'autre extrémité de la bielle est articulée avec jeu sur l'axe 10. La longueur de la bielle est égale au rayon de l'arc de cercle que décrit l'axe 10 et le support 18 est disposé de telle sorte que l'outil 17 soit disposé au centre de l'arc de cercle. Quand le vérin fonctionne, l'outil 17 est animé d'un mouvement de rotation alternative, son centre restant approximativement fixe.

On peut observer ici que l'effort exercé par le vérin sur l'outil de rodage engendre une contrainte sur la tête du robot; mais cette contrainte est négligeable par rapport à la contrainte de position que l'invention cherche à éliminer en donnant de la flexibilité à l'outil.

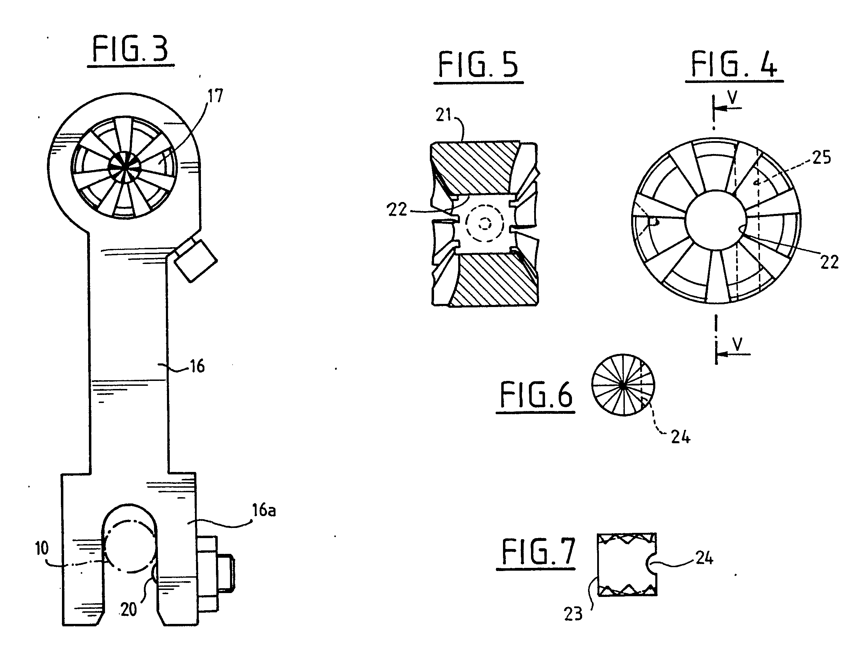

On voit à la Figure 3, la bielle 16 dont l'extrémité articulé comporte un étrier 16a muni d'une butée à ressort 20 à bille. L'axe 10 engagé dans l'étrier admet un jeu défini par la position de la bille. Pour remplacer la bielle quand la fraise est usée, il suffit d'exercer un effort suffisant pour écraser le ressort et éclipser la bille. Cette opération peut être réalisée séquentiellement par le robot.

L'articulation avec jeu de la bielle 16 lui permet de s'adapter à la tolérance de position du robot et des électrodes après plusieurs rodages sans contraindre la tête du robot.

Les Figures 4 à 7 représentent l'outil de rodage 17. Il se compose d'une fraise 21 à double denture conique avec un perçage axial 22. A l'intérieur du perçage 22 est engagé un pion cylindrique 23 muni sur ses deux faces d'extrémités de dentures radiales. Chaque denture se compose de huit arêtes radiales situées dans le plan de la face active du pion et entre lesquelles sont intercalées huit arêtes inclinées. Des plans inclinés relient les arêtes actives et les arêtes inclinées (Figures 6 et 7).

Le pion 23 est muni sur sa surface périphérique d'une rainure 24 perpendiculaire à l'axe. Cette rainure 24 coopère avec un perçage excentré 25 de la fraise conique 21 pour permettre le passage d'une goupille de fixation qui solidarise le pion et la fraise.

Cet outil de rodage 17 permet d'assurer simultanément, par les dentures de la fraise 21, le rodage des parties tronconiques des deux électrodes du robot et, par les dentures des faces d'extrémité du pion 23, celui des parties planes de ces électrodes.

## Revendications

1. Appareil de rodage automatique d'électrodes de robot de soudage comportant un châssis (1) sur lequel sont montés des moyens pour entraîner un outil de rodage (17) en rotation, caractérisé en ce que l'outil (17) est monté à l'une des extrémités d'une bielle (16) en appui sur le chassis (1) de l'appareil, celui-ci étant muni de moyens pour que la seconde extrémité de la bielle (16) soit entraînée par un vérin articulée (3) selon un mouvement en arc de cercle approximativement centré sur l'outil.

2. Appareil selon la revendication 1, caractérisé en ce que la seconde extrémité de la bielle (16) est attelée à la tige du vérin (3) par un axe (10) muni de galets (15) qui circulent dans des ouvertures (14) en arcs de cercle qui forment cames et sont ménagées dans deux plaques parallèles fixes (11).

3. Appareil selon la revendication 2, caractérisé en ce que l'extrémité de la bielle (16) entraînée par le vérin (3) est articulée sur l'axe (10) avec un jeu par le moyen d'une bille à ressort (20) et en ce que l'extrémité de cette bielle portant l'outil (17) est en appui sur le chassis (1) par l'intermédiaire d'une butée élastique (19).

4. Appareil selon l'une des revendications 1 à 3, caractérisée en ce que l'outil (17) comprend une fraise à double denture conique (21) munie d'un perçage axial (22) dans lequel est fixé un pion (23) muni d'une denture plan (24) à chacune de ses extrémités.

## Patentansprüche

1. Gerät zum automatischen Läppen von Elektroden von Schweißrobotern mit einem Gestell (1), an dem Mittel für den Drehantrieb eines Läppwerkzeugs (17) angeordnet sind, dadurch gekennzeichnet, daß das Werkzeug (17) an einem der Enden einer Stange (16) angeordnet ist, die sich am Gestell (1) des Gerätes abstützt, wobei letzteres mit Mitteln zum Antrieb des zweiten Endes der Stange (16) durch einen gelenkig angeordneten Arbeitszylinder (3) in einer angenähert auf das Werkzeug zentrierten kreisbogenförmigen Bewegung versehen ist.

2. Gerät nach Anspruch 1, dadurch gekennzeichnet, daß das zweite Ende der Stange (16) an die Kolbenstange des Arbeitszylinders (3) über eine Achse (10) angekoppelt ist, die mit Rollen (15) versehen ist, welche in kreisbogenförmigen Öffnungen (14) umlaufen, die Nockenführungen bilden und in zwei festen zueinander parallelen Platten (11) angeordnet sind.

3. Gerät nach Anspruch 2, dadurch gekennzeichnet, daß das vom Arbeitszylinder (3) angetriebene Ende der Stange (16) mit der Achse (10) gelenkig mit einem Spiel verbunden ist, das durch eine unter Federwirkung stehende Kugel (20) gegeben ist, und daß das Ende dieser Stange, welches das Werkzeug (17) trägt, sich am Gestell (1) unter Zwischenschaltung eines elastischen Anschlags (19) abstützt.

4. Gerät nach einem der Ansprüche 1 bis 3, dadurch gekennzeichnet, daß das Werkzeug (17) einen mit zwei koniscdhen Zahnungen versehenen Fräser (21) aufweist, der eine axiale Bohrung (22) besitzt, in der ein Stift (23) befestigt ist, der an jedem seiner Enden mit einer ebenen Zahnung (24) versehen ist.

## Claims

1. Apparatus for the automatic lapping of welding robot electrodes, comprising a frame (1) on which means are mounted for driving a lapping tool (17) in rotation, characterized in that the tool (17) is mounted at one of the ends of a link (16) bearing on the frame (1) of the apparatus, the latter being provided with means so that the second end of the link (16) is driven by an articulated cylinder (3) in a movement along an arc of a circle centred approximately on the tool.

2. Apparatus according to claim 1, characterized in that the second end of the link (16) is coupled to the rod of the cylinder (3) by a shaft (10) having rollers (15) which travel in openings (14) in the shape of arcs of circles which serve as cams and are formed in two fixed parallel plates (11).

3. Apparatus according to claim 2, characterized in that the end of the link (16) driven by the cylinder (3) is articulated to the shaft (10) with play by means of a spring ball (20) and in that the end of this link carrying the tool (27) bears on the frame (1) via a resilient stop (19).

4. Apparatus according to one of claims 1 to 3, characterized in that the tool (17) comprises a milling cutter with double conical toothing (21) having an axial bore (22) in which is fixed a piece (23) with flat toothing (24) at each of its ends.

FIG. 2

FIG.1

FIG.3

FIG.5

FIG.4

FIG.6

FIG.7

EP 0 262 048 B1